# EUROPEAN PATENT SPECIFICATION

(11) **EP 2 411 256 B1**
(45) Date of publication and mention of the grant of the patent: **01.03.2017**
(21) Application number: 10717301.5
(22) Date of filing: 18.03.2010
(51) Int. Cl.: B62D 1/06, B60K 26/02, B62D 1/04

(54) **CIRCULAR DEVICE FOR MANUAL ACCELERATOR CONTROL**
KREISFÖRMIGE VORRICHTUNG ZUR MANUELLEN DROSSELKLAPPENSTELLGLIEDSTEUERUNG
DISPOSITIF CIRCULAIRE POUR COMMANDE MANUELLE D'ACCÉLÉRATEUR

(30) Priority: 23.03.2009 IT RM20090125
(43) Date of publication of application: 01.02.2012
(73) Proprietor: Guidosimplex S.r.l., 00166 Roma (IT)
(72) Inventor: VENTURINI, Sandro, I-00166 Roma (IT)
(74) Representative: Iannone, Carlo Luigi
(86) International application number: PCT/IT2010/000118
(87) International publication number: WO 2010/109510

(56) References cited:
- EP-A- 0 816 156
- WO-A-01/08918
- FR-A- 2 917 342

## Description

The present invention relates to a device for controlling little-wheel accelerator. More specifically, the invention refers to a control device for a little-wheel accelerator exploiting a rotative movement in order to obtain transmission of control in every rotation position of the steering wheel. It must be clear since from the beginning that device according to the invention can be provided either above or under the steering wheel.

As it is well known, many solutions have been suggested in the last decades aiming offering to handicapped persons possibility of driving vehicles with the best comfort and safety conditions. All known solutions suggested until today are based on the use of devices acting from above or under the steering wheel. Obviously, suggested solutions must be all realised in such a way to fulfil the safety requirements provided by existing rules. During last years, by development of electronics, different solutions have been suggested exploiting a potentiometer in order to transmit acceleration control from steering wheel to the accelerator.

Most of the known solutions provide the use of a little-wheel, coaxially provided above or under the steering wheel, and on which one can act, on the basis of its position with respect to the steering wheel, by pushing or pulling the same.

Main problems of this kind of devices are dimensions of the little-wheel and, mainly, in case it is provided above the steering wheel, dimensions and obstacle to the air-bag deployment. In this context, it is included the solution suggested by the present invention, permitting having a device of the above kind able to face up and solve all the above mentioned problems.

These and other results are obtained, according to the present invention, suggesting a device for controlling the little-wheel accelerator, providing acceleration structure independent from the same steering wheel, thus eliminating every dimensions and obstacle to the air-bag action, as well as permitting an easy acceleration in every position of the steering wheel during the standard driving situations.

WO 01/08918 describes a device according to the precharacterising portion of independent claim 1.

It is therefore specific object of the present invention device for controlling little-wheel accelerator, comprising a support element, fixed to the steering wheel, so as to move integrally with the same, and bearing rotation sliding elements for said little-wheel with respect to the steering wheel - support element assembly, sliding means for said rotation sliding element being provided on said little-wheel, at least one potentiometer, and return means for bringing little-wheel in its normal rest position regardless the rotation direction of the same little-wheel, said device being characterized in that said rotation sliding elements are comprised of idle pins, having one end housed within suitable seats obtained in said support element, and the other end sliding within grooves realized in the little-wheel.

Furthermore, according to the invention, said rotation sliding elements are comprised of idle pins, having one end housed within suitable seats obtained in said support element, and the other end sliding within grooves realized in the little-wheel.

In a further embodiment of the device according to the invention, it comprises a support element, fixed to the steering wheel, so as to move integrally with the same, and bearing a pair of projecting elements, a little-wheel, provided with two sliding tracks having an eccentric profile, two potentiometers, with an interaction element coupled with a relevant one of said two sliding tracks, and return means for said little-wheel, to bring it back to the rest position.

Preferably, according to the invention, said means for bringing back said little-wheel to the rest position comprise appendixes, coupled at one end of said elements projecting from said support element, and having the other end slidable within a sliding slot obtained in said little-wheel, return springs being provided between said little-wheel and said appendixes.

Still according to the invention, that said potentiometers are linear potentiometers, circular potentiometers or sliding potentiometers.

Finally, according to the invention, position of the little-wheel can be monitored by electronic, magnetic, video, mechanical systems or by any combination thereof.

Present invention will be now described, for illustrative and not limitative purposes, according to its preferred embodiments, with particular reference to the figures of the enclosed drawings, wherein,
figure 1 is a perspective view of a first embodiment of a device for controlling accelerator according to the invention;
figure 2 is an exploded view of device of figure 1;
figure 3 is an exploded view of a second embodiment of a device for controlling little-wheel accelerator according to the invention;
figure 4 is a plan view of a third embodiment of a device according to the invention;
figure 5 is a front view of device of figure 4;
figure 6 shows a first particular of device of figure 4; and
figure 7 shows a second particular of device of figure 4.

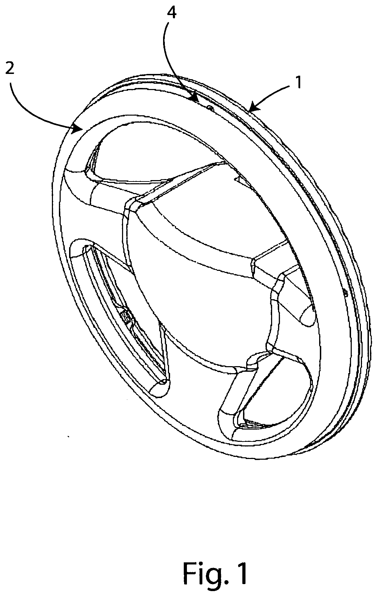

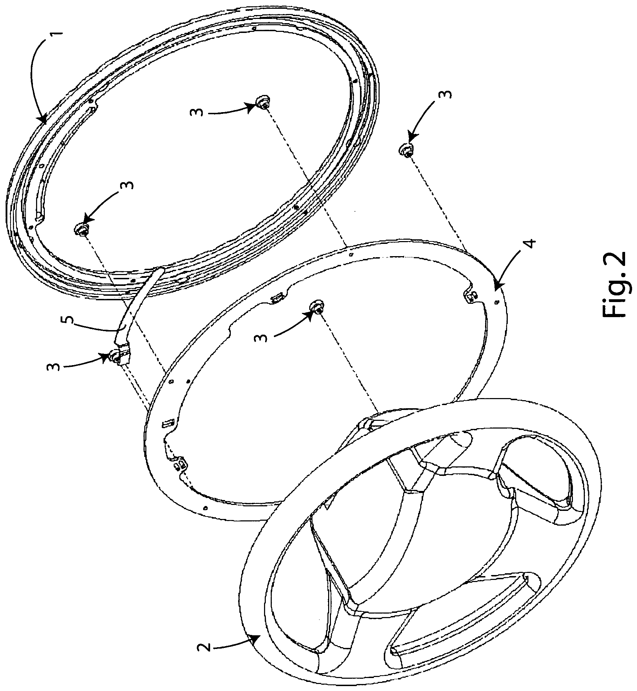

Observing first figures 1 and 2, it is shown a first embodiment of device according to the invention, comprising a little-wheel, to be applied under or above the steering wheel 2 of the vehicle, permitting transmitting control for managing accelerator.

Device according to the invention provides that acceleration is obtained by rotating little-wheel 1 about its own symmetry axis and with respect to steering wheel 2.

Starting from a rest position, in order to accelerate, little-wheel 1 is rotated, either clockwise or anticlockwise, against force exerted by a spring (not shown in these figures). Acceleration obtained is proportional to amount of rotation; maximum acceleration is obtained when rotation reaches a limit angle, set by designer (in the embodiment shown, highest acceleration is reached by a rotation of 15°). Having accelerated rotating little-wheel according to a direction, rotating the same in the opposite direction, acceleration is reduced up to zero, in the rest position.

If released, little-wheel 1 goes back to the rest position by the action of said spring.

Idle pins are indicated by reference number 3, a support flange is indicated by reference number 4, while a sliding potentiometer is indicated by reference number 5.

Support flange 4 is fixed to the steering wheel 2 by straps or similar systems, not represented in the figures.

One end of idle pins 3 is housed on said support flange 4, within suitable holes. Other end of idle pins 3 is housed within groove obtained within little-wheel 1, so as to permit a circular movement between flange 4 and little-wheel 1.

Sliding potentiometer is housed on flange 4, on the same side of little-wheel 1.

A feeler pin (not shown in the figures) is provided on little-wheel 1, said feeler pin, sliding on potentiometer 5, permits being able recognising position each other between flange 4, which is integral with steering wheel 2, and little-wheel 1. This information is sent to a suitable electronic unit, processing signal and transmitting acceleration control to standard electronics of the vehicle.

Return of little-wheel 1 to the rest, or not acceleration, position occurs by action of two springs, one for clockwise rotations and one for anticlockwise rotations, not shown in the figures.

Manual acceleration device thus realised is mounted in such a position not to hinder airbag action and to permit an optimum view of instruments.

Information concerning position between little-wheel, and part of the same, and steering wheel, must be sent to a suitable unit, transmitting control to original electronics of the vehicle, thus permitting acceleration.

Position of the little-wheel can be monitored by any instrument suitable to this kind of function (electronic, magnetic, video, mechanical systems, ecc.).

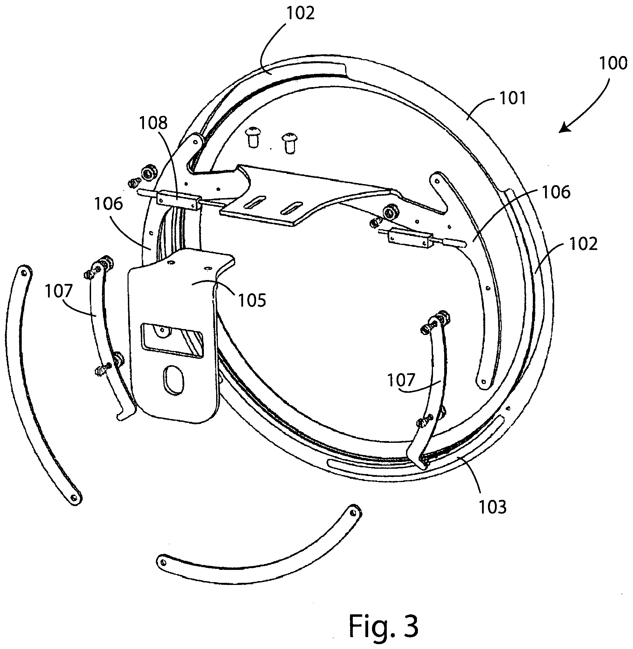

Observing now figure 3, it is shown an embodiment of a device according to the invention, generically indicated by reference number 100, comprising a little-wheel 101, provided with inner tracks 102, that can be projecting or depressed with respect to the little-wheel, as well as with slots 103, for housing pulling or compression springs (not shown in this figure, but that will be described with reference to the second embodiment), for returning the little-wheel 101 to the initial position.

Said little-wheel 101 is sustained by support 104, coupling with a bracket 105 fixed to the steering wheel. Said support 104 has two shaped elements 106, depressed or projecting on the basis of the chosen profile, coupling with said inner tracks 102, permitting rotation sliding of little-wheel 101 with respect to the steering wheel (not shown).

Little-wheel 101, which is, as already said, constrained, can only rotate with respect to the bracket 105 fixed to the steering wheel, both above or under the same, at the wished distance.

Free ends of said shaped elements 106 are coupled with appendixes 107, having their opposite end sliding within said slots 103, by interposition of return springs (not shown).

Thus, little-wheel 101 can rotate 180° according to every direction.

Two potentiometers 108 are provided on shaped elements 106 of support 105, sliding along said tracks 102, and having an eccentric surface, so that, rotating little-wheel 101, it changes diameter from the centre, thus pushing potentiometers 108, varying their position or acceleration signal.

Eccentricity of tracks 102 can be addressed both inside the little wheel 101 and toward opposed parts, and can have a toothed profile.

Potentiometers can be of the linear, rotative or sliding type.

Rotation of little-wheel 101 can also be realised by sliding spheres or by bearings.

As it can be observed, solution according to the invention permits rotation also by small upper limbs, since little-wheel 101 is operated by a rotatory movement close to the same steering wheel. Operation occurs according to every direction, rightward or leftward, with a right or left limb, makes it easier observing instruments, reducing physical stress of lower limb when driving for average and long distances.

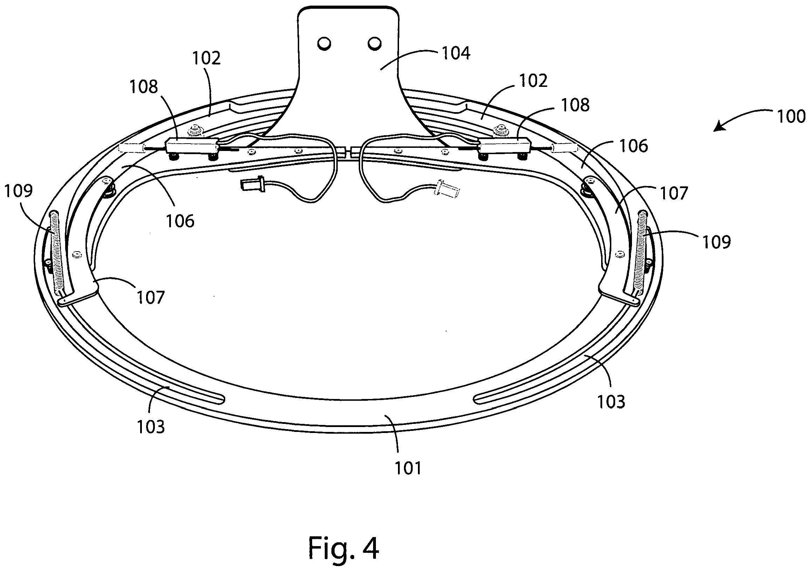

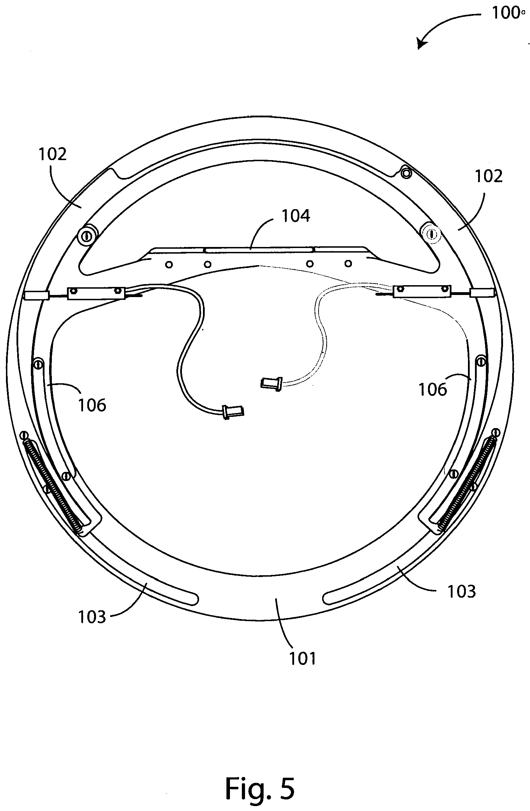

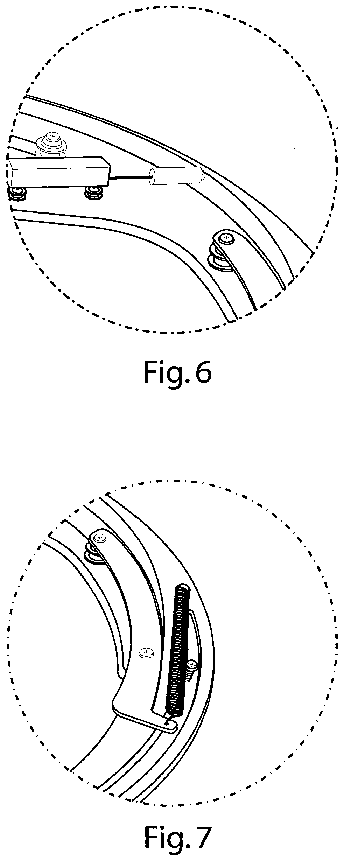

Coming now to observe figures 4 - 6, it is shown a second embodiment of a device according to the invention, for the specification of which the same reference numbers used for the previous embodiment will be used.

Particularly, in this embodiment it is provided a different shape of appendixes 107 and of slots 103. Furthermore, return springs are shown in these figures.

As to all the other aspects, device 100 of these figures has the same structural and functional features of device of embodiment of figure 3.

The present invention has been described for illustrative and not limitative purposes, according to its preferred embodiments, but it is to be understood that variations and/or modifications can be introduced by those skilled in the art without departing from the scope, as defined by the enclosed claims.

## Claims

1. Device for controlling a little-wheel (1; 100) accelerator, comprising a support element (4; 104), fixed to a steering wheel (2; 102), so as to move integrally with the same, and bearing rotation sliding elements (3) for said little-wheel (1; 100) with respect to the steering wheel (2; 102) - support element (4; 104) assembly, sliding means for said rotation sliding element being provided on said little-wheel (1; 100), at least one potentiometer, and return means for bringing little-wheel (1; 100) into its normal rest position regardless the rotation direction of the same little-wheel, said device being **characterised in that** said rotation sliding elements are comprised of idle pins (3), having one end housed within suitable seats obtained in said support element (4; 104), and the other end sliding within grooves (103) realised in the little-wheel (1; 100).

2. Device according to claim 1, **characterised in that** said support element is comprised of a flange (4), fixed to the steering wheel by straps or like.

3. Device according to claim 1, or 2, **characterised in that** said little-wheel (1; 100) provides a feeler pin or other detection means which, sliding on said at least one potentiometer, permit recognising position between support element (4; 104) and little-wheel (1; 100), being it provided a central switch receiving information and transmitting signal to the vehicle electronics.

4. Device according to claim 1, **characterised in that** it comprises a support element (104), fixed to the steering wheel (102), so as to move integrally with the same, and bearing a pair of projecting elements (106), a little-wheel (100), provided with two sliding tracks (102) having an eccentric profile, two potentiometers (108), with an interaction element coupled with a relevant one of said two sliding tracks (102), and return means for said little-wheel, to bring it back to the rest position.

5. Device according to claim 4, **characterized in that** said means for bringing back said little-wheel to the rest position comprise appendixes (107), coupled at one end of said elements projecting from said support element, and having the other end slidable within a sliding slot obtained in said little-wheel, return springs being provided between said little-wheel and said appendixes.

6. Device according to one of the preceding claims, **characterized in that** said potentiometers are linear potentiometers, circular potentiometers or sliding potentiometers.

7. Device according to one of the preceding claims, **characterized in that** position of the little-wheel can be monitored by electronic, magnetic, video, mechanical systems or by any combination thereof.

## Patentansprüche

1. Gerät zum Steuern eines Beschleunigers mit einem kleinen Rad (1; 100) umfassend ein Haltelement (4; 104), das an einem Lenkrad (2; 102) befestigt ist, um sich einheitlich damit zu bewegen, und das Drehschiebeelemente (3) für das kleine Rad (1; 100) in Bezug auf die Anordnung des Lenkrades (2; 102) und des Halteelements (4; 104) trägt, wobei Schiebemittel für das Drehschiebeelement vorgesehen sind auf dem kleinen Rad (1; 100), mindestens ein Potenziometer und Rückführmittel, um das kleine Rad (1; 100) in seine normale Ruheposition zu bringen unabhängig von der Drehrichtung des kleinen Rades, wobei die Vorrichtung **dadurch gekennzeichnet ist, dass** die Drehschiebeelemente aus Leerlaufstiften (3) bestehen mit einem Ende beherbergt innerhalb von geeigneten Sitzen, die man in dem Halteelement (4; 104) erhält und mit dem anderen Ende verschieblich innerhalb von Nuten (103), die in dem kleinen Rad (1; 100) realisiert sind.

2. Vorrichtung gemäß Anspruch 1, **dadurch gekennzeichnet, dass** das Halteelement aus einem Flansch (4) besteht, der durch Bänder oder dergleichen an dem Lenkrad befestigt ist.

3. Vorrichtung gemäß Anspruch 1 oder 2, **dadurch gekennzeichnet, dass** das kleine Rad (1; 100) einen Fühlstift oder andere Erfassungsmittel vorsieht, die es gleitend auf dem mindestens einen Potentiometer erlauben, die Position zwischen dem Halteelement (4; 104) und dem kleinen Rad (1; 100) zu erkennen, wobei ein Zentralschalter vorgesehen ist, der Informationen empfängt und Signale an Fahrzeugelektronik sendet.

4. Vorrichtung gemäß Anspruch 1, **dadurch gekennzeichnet, dass** es ein Halteelement (104) aufweist, das an dem Lenkrad (102) befestigt ist, um sich einheitlich damit zu bewegen, und ein Paar von Vorsprungselementen (106) trägt, sowie ein kleines Rad (100) versehen mit zwei Gleitspuren (102) mit einem exzentrischen Profil, zwei Potenziometern (108), mit einem Interaktionselement, das mit einem relevanten der beiden zwei Gleitspuren (102) gekoppelt ist, und mit Rückführmitteln, um das kleine Rad zurück in seine Ruheposition zu bringen.

5. Vorrichtung gemäß Anspruch 4, **dadurch gekennzeichnet, dass** die Mittel zum Zurückbringen des kleinen Rades in seine Ruhestellung Fortsätze (107) aufweisen, die mit einem Ende der Elemente verbunden sind, die von dem Halteelement vorstehen, und die mit dem anderen Ende verschiebbar innerhalb eines Schiebeschlitzes sind, den man in dem kleinen Rad erhält, wobei Rückführfedern vorgesehen sind zwischen dem kleinen Rad und den Fortsätzen.

6. Vorrichtung gemäß einem der vorangehenden Ansprüche, **dadurch gekennzeichnet, dass** die Potentiometer Linearpotentiometer, kreisförmige Potentiometer oder Schiebepotentiometer sind.

7. Vorrichtung gemäß einem der vorangehenden Ansprüche, **dadurch gekennzeichnet, dass** die Stellung des kleinen Rades überwacht werden kann durch elektronische, magnetische, Video- oder mechanische Systeme oder durch eine Kombination davon.

## Revendications

1. Dispositif pour la commande d'un accélérateur sous la forme d'une petite roue (1 ; 100), comprenant un élément (4 ; 104) faisant office de support fixé à un volant (2 ; 102) de façon à se déplacer en une seule pièce avec celui-ci, et supportant des éléments coulissants rotatifs (3) pour ladite petite roue (1 ; 100) par rapport à l'assemblage volant (2; 102) - élément (4; 104) faisant office de support, des moyens coulissants pour lesdits éléments coulissants rotatifs étant prévus sur ladite petite roue (1 ; 100), au moins un potentiomètre et des moyens de retour pour ramener la petite roue (1 ; 100) dans sa position normale de repos sans prendre en compte la direction de rotation de ladite petite roue, ledit dispositif étant **caractérisé en ce que** lesdits éléments coulissants rotatifs comprennent des broches inactives (3) dont une extrémité est logée au sein de sièges appropriés disponibles dans ledit élément (4 ; 104) faisant office de support et dont l'autre extrémité coulisse au sein de rainures (103) réalisées dans la petite roue (1 ; 100).

2. Dispositif selon la revendication 1, **caractérisé en ce que** ledit élément faisant office de support comprend une bride (4) fixée au volant par des sangles ou analogues.

3. Dispositif selon la revendication 1 ou 2, **caractérisé en ce que** ladite petite roue (1 ; 100) est munie d'un palpeur ou d'un autre moyen de détection qui, en coulissant sur ledit au moins un potentiomètre, permet de reconnaître la position entre l'élément (4 ; 104) faisant office de support et la petite roue (1 ; 100), un commutateur central étant prévu, qui reçoit des informations et qui transmet des signaux à l'électronique du véhicule.

4. Dispositif selon la revendication 1, **caractérisé en ce qu'**il comprend un élément (104) faisant office de support fixé au volant (102) de façon à se déplacer en une seule pièce avec celui-ci et supportant une paire d'éléments saillants (106), une petite roue (100) munie de deux pistes coulissantes (102) possédant un profil excentrique, deux potentiomètres (108), un élément d'interaction étant couplé à une piste pertinente parmi lesdites deux pistes coulissantes (102), et un moyen de retour pour ladite petite roue pour la ramener dans la position de repos.

5. Dispositif selon la revendication 4, **caractérisé en ce que** ledit moyen pour ramener ladite petite roue dans la position de repos comprend des appendices (107) couplés à une extrémité desdits éléments faisant saillie par rapport audit élément faisant office de support et dont l'autre extrémité est à même de coulisser au sein d'une fente de coulissement prévue dans ladite petite roue, des ressorts de rappel étant prévus entre ladite petite roue et lesdits appendices.

6. Dispositif selon l'une quelconque des revendications précédentes, **caractérisé en ce que** lesdits potentiomètres sont des potentiomètres linéaires, des potentiomètres circulaires ou des potentiomètres coulissants.

7. Dispositif selon l'une quelconque des revendications précédentes, **caractérisé en ce que** la position de la petite roue peut être surveillée par voie électronique, magnétique, par vidéo, via des systèmes mécaniques, ou via l'une quelconque de leurs combinaisons.
